# DEMANDE DE BREVET EUROPEEN

(11) **EP 2 002 899 A1**
(43) Date de publication de la demande: **17.12.2008**
(21) Numéro de dépôt: 08104345.7
(22) Date de dépôt: 10.06.2008
(51) Int. Cl.: B05D 3/12, B05D 5/02, B05D 7/00, B44F 1/08, B44C 1/26, B44C 3/10, B44C 5/00, B44F 1/06, C04B 26/14, C04B 26/16, C09D 7/12, E04F 13/02, E04F 13/14, E04F 15/02, E04F 15/12, E04F 21/06, E04F 21/16, E04F 21/24, C04B 14/22

(54) **Revêtement de sol ou mural en verre recyclé, procédé d'application in situ et procédé de fabrication d'un tel revêtement**

(30) Priorité: 14.06.2007 CH 9502007
(71) Demandeur: Paccaud, Alexandre, 1325 Vaulion (CH)
(72) Inventeur: Paccaud, Alexandre, 1325 Vaulion (CH)
(74) Mandataire: Vigand, Philippe

(57) **Abrégé**

L'invention concerne un revêtement de sol, mural ou de plafond comprenant un mélange de verre recyclé avec un liant, formant un matériau poreux présentant des aspérités est caractérisé en ce qu'il comprend en outre un matériau de remplissage appliqué sur le matériau poreux séché pour en remplir les aspérités. L'invention concerne également un procédé d'application in situ ainsi qu'un procédé de fabrication d'un tel revêtement.

## Description

### DOMAINE TECHNIQUE

La présente invention concerne de manière générale un revêtement de sol, mural ou de plafond, à base de verre recyclé. La présente invention concerne plus particulièrement différentes compositions de revêtement, un procédé d'application in situ de tels revêtements ainsi qu'un procédé de fabrication de ces revêtements, ou de plaques de tout format pour la réalisation de tels revêtements.

### ARRIERE-PLAN TECHNOLOGIQUE

Il est connu dans l'art antérieur un grand nombre de revêtements pour sol ou revêtements muraux. Certains revêtements existants ont pour but d'utiliser des matériaux recyclés dans un souci d'économie de la matière première, et en particulier du verre.

Toutefois, tous les revêtements proposés jusqu'à aujourd'hui nécessitent un procédé de fabrication délicat à haute température ou au contraire à très basse température (par gélification), ainsi qu'une pose difficile en particulier pour des surfaces complexes présentant des recoins ou des zones couvertes à une hauteur limitée, comme par exemple sous des tuyaux ou des soupentes. En outre, de tels revêtements fabriqués à l'aide de résine, présentent un effet de traction fragilisant la structure du revêtement.

### RESUME DE L'INVENTION

Le but de la présente invention est de pallier aux inconvénients mentionnés ci-dessus en fournissant une composition de revêtement de sol ou revêtement mural ou de plafond, un procédé de fabrication à température ambiante capable d'être mis en oeuvre in situ pour permettre un procédé d'application aisé quelque soit le type de surfaces à recouvrir.

Dans ce but, selon un premier aspect, la présente invention concerne un revêtement de sol, un revêtement mural, ou de plafond, comprenant un mélange de verre recyclé avec un liant, formant un matériau poreux présentant des aspérités, caractérisé en ce que revêtement comprend en outre un matériau de remplissage appliqué sur le matériau poreux séché pour en remplir les aspérités. Une telle composition présente plusieurs avantages parmi lesquels celui de former un revêtement compact et solide susceptible d'être apposé sur n'importe quel type de surface de sol, mural ou de plafond. En effet, une telle composition peut être réalisée sous la forme d'un seul tenant aussi bien que sous la forme de carreaux pouvant être assemblés avec ou sans joint.

Selon une variante avantageuse, le revêtement est caractérisé en ce que le liant et le matériau de remplissage utilisés sont des résines transparentes ou translucides. Le matériau de base, c'est-à-dire le verre recyclé, étant également transparent ou translucide, le revêtement ainsi obtenu est plus ou moins transparent ou plus ou moins translucide, ce qui permet d'obtenir un effet esthétique par un jeu de lumières possible dans ou au travers du revêtement.

Selon une autre variante avantageuse, le revêtement est caractérisé en ce qu'il comprend des moyens d'illumination disposés sous ou directement dans le mélange de verre et de liant. Un tel revêtement permet d'obtenir dans le cas d'une application au sol, un sol lumineux ou dans le cas d'une application murale, d'un mur lumineux, dans le cas d'une application à un plafond, un plafond lumineux.

Selon une autre variante avantageuse, le revêtement est caractérisé en ce qu'il comprend un élément de coloration, obtenu soit par l'utilisation de verre recyclé multicolore, soit au moyen d'une pigmentation ou poudre colorante ou d'une teinture additionnelle. L'utilisation d'un tel élément de pigmentation permet d'obtenir un effet esthétique par jeu de couleurs.

Selon une autre variante avantageuse, le revêtement est caractérisé en ce qu'il comprend une couche de finition pour fournir un aspect supérieur de finition modifié. Selon le vernis apposé, il est possible d'obtenir différents effets supérieurs de finition selon les besoins ou les souhaits du client.

Selon un deuxième aspect, la présente invention concerne un procédé d'application in situ d'un revêtement de sol comprenant les étapes consistant à: (i) déposer un pont d'adhérence sur une surface de sol à recouvrir; (ii) mélanger du verre recyclé avec un liant de manière à obtenir un matériau poreux présentant des aspérités; (iii) appliquer le matériau poreux obtenu sur la surface au sol à recouvrir; (iv) passer un rouleau de lissage de manière croisée sur le matériau poreux; (v) sécher le matériau poreux; (vi) couler un matériau de remplissage pour remplir les aspérités du matériau poreux au maximum jusqu'au niveau de sa surface supérieure et sécher. Un tel procédé d'application de revêtement de sol présente comme avantage principal d'être entièrement réalisable sur site. D'autres avantages particuliers seront donnés dans la description détaillée à suivre.

Selon une variante avantageuse, le procédé d'application in situ est caractérisé en ce qu'il comprend les étapes supplémentaires suivantes consistant à: (vii) poncer la surface supérieure pour éliminer les irrégularités; (viii) vitrifier la surface supérieure par application d'une résine; (ix) sécher la couche vitrifiée; (x) vernir par application d'une couche supplémentaire de résine; (xi) passer un rouleau à poil de manière croisée et sécher.

Selon une autre variante avantageuse, le procédé d'application in situ est caractérisé en ce que le rouleau de lissage est un rouleau en matériau dur peu adhérent. L'utilisation d'un tel rouleau de lissage en matériau dur permet une égalisation et planéité parfaite tout en assurant une durée de vie satisfaisante du rouleau et en évitant l'accrochage du mélange de verre et de liant sur le rouleau grâce à la faible adhérence du métal.

Selon un troisième aspect, la présente invention concerne un procédé de fabrication d'une composition de revêtement de sol, mural ou de plafond comprenant les étapes consistant à mélanger du verre recyclé avec un liant de manière à obtenir un matériau poreux présentant des aspérités; à sécher le matériau poreux; et de couler une résine pour remplir les aspérités du matériau poreux.

D'autres caractéristiques et avantages de la présente invention apparaîtront plus clairement à la lecture de la description détaillée qui suit de modes de réalisation de l'invention donnés à titre d'exemples nullement limitatifs.

### DESCRIPTION DETAILLEE DE L'INVENTION

Selon un premier aspect, la présente invention concerne une composition de revêtement de sol, mural ou de plafond à base de verre recyclé.

Tout d'abord on notera qu'il est utilisé de préférence un agrégat de morceaux de verre concassé ou pilé, les morceaux présentant une granulométrie maximale comprise entre 0 à 6 mm. La finesse des morceaux de verre utilisés permet d'obtenir sans difficulté un revêtement sensiblement plat après la réalisation du mélange avec le liant comme il sera vu plus loin. Ceci permet en outre de gommer les irrégularités éventuellement présentes sur le support du revêtement. On notera encore que ces morceaux, éventuellement après tamisage, permettent de réaliser une épaisseur de revêtement de 4 mm et plus.

Il est prévu de pouvoir utiliser différents types de verre recyclé suivant le rendu final souhaité. Ainsi par exemple, on utilisera du verre multicolore ou trié, i.e. blanc, brun, vert, bleu pour obtenir un revêtement coloré et translucide. Alternativement, le verre pourra être traité par enrobage et/ou remplissage teinté ou pigmenté, le résultat pouvant être vitrifié suivant le rendu souhaité, i.e. brillant, satiné ou mat.

II est également prévu de pouvoir utiliser comme agrégat de morceaux de verre, du verre tamisé ou du tout-venant, du verre brut ou du verre lavé, avec ou sans adjonction de décors.

Cette matière de base, à savoir le verre recyclé, est mélangée avec un liant assurant l'homogénéité du revêtement. Le liant utilisé sera avantageusement transparent ou translucide pour garder l'effet global transparent ou translucide du verre. Ainsi on pourra par exemple utilisé une résine mono composante polyuréthanne transparente, ou à titre de variante une résine bi composante époxy ou polyuréthanne transparente.

Afin d'obtenir une pluralité d'effets de couleurs, il est avantageux d'ajouter au mélange de verre recyclé avec le liant, un élément de coloration, comme par exemple une pigmentation ou une teinture. Ainsi, de très nombreuses variations de couleurs et d'effets de profondeur sont offertes, que ne permettent généralement pas les couleurs existantes du verre.

Le mélange d'agrégat de morceaux de verre et de liant, une fois séché, se présente sous la forme d'un matériau poreux présentant des aspérités. Ainsi pour obtenir un revêtement à la fois plein, solide et sans contrainte interne, un matériau de remplissage est versé et étendu sur le matériau poreux de manière à remplir les aspérités qu'il présente. A nouveau, on utilisera avantageusement un matériau de remplissage transparent ou translucide pour garder l'aspect général transparent ou translucide du revêtement.

Suivant les propriétés recherchées pour le revêtement, on pourra utiliser une résine époxy ou polyuréthane bi composante transparente de haute résistance à l'abrasion et aux ultraviolets pour garantir un revêtement de sol, mural ou de plafond résistant à l'abrasion ou aux ultraviolets, pouvant s'avérer nécessaire en particulier en raison de sa transparence. Alternativement, une résine époxy ou polyuréthanne résistant à la haute température pourra être utilisée ou encore selon une autre variante, une résine avec une adjonction de teinture ou un élément de pigmentation.

Selon une variante avantageuse, il est prévu d'appliquer une couche de finition sur le revêtement de manière à obtenir un effet de brillance, satiné, mat, lisse, structuré, et/ou antidérapant. Pour cela, on utilise de préférence à nouveau une couche de résine époxy ou polyuréthanne bi composant. Selon une autre variante, on utilisera un vernis époxy ou polyuréthanne bi ou mono composant sous forme aqueuse.

On notera que toutes les variantes de compositions de revêtement présentées ci avant présentent l'avantage de ne pas nécessiter de machines complexes, de fours ou tout autre outillage coûteux pour leur réalisation ce qui permet notamment la fabrication et la pose de tels revêtements in situ, c'est-à-dire sur site.

Selon un deuxième aspect, la présente invention concerne le procédé d'application in situ d'un revêtement de sol selon l'une quelconque des variantes exposées ci-dessus. Un tel procédé d'application comprend la fabrication et la pose du revêtement sur site, ce qui présente le double avantage de la simplicité, car utilisable par tous, et de la rapidité, toutes les opérations étant effectuées sur place.

Nous donnerons ci-après un exemple de procédé d'application in situ d'un revêtement de sol sans joint. Tout d'abord, il est important de noter que ce type de revêtement de sol peut être appliqué sur tout types de support neufs ou en rénovation. Une étape préliminaire, consiste dans l'application d'un pont d'adhérence sous la forme par exemple d'une couche d'accrochage présentant un pouvoir de frein vapeur ou barrière de vapeur réalisant une fermeture du support et évitant ainsi toute absorption de matériau de remplissage par le support. On citera comme exemples de supports utilisables une dalle ou radier en béton taloché, une chape en ciment, une chape en ciment d'anhydrite, un fluide d'anhydrite, un ancien carrelage adhérant, un ancien parquet fixé, etc,...

Une première étape consiste à mélanger au moyen d'une mélangeuse transportable sur site, des agrégats de verre recyclé avec un liant polyuréthanne ou époxy, avec ou sans pigmentation ou teinture.

Une seconde étape consiste à appliquer et régler de manière uniforme le mélange sur le support à l'aide d'une règle, selon le principe de réglage d'une chape. L'étape optionnelle de régularisation de la surface permet d'aplanir le mélange appliqué avec approximativement l'épaisseur souhaitée.

Une troisième étape consiste à la mise en place du mélange à l'aide d'un rouleau de lissage, sous la forme d'un rouleau à main, avec un passage croisé. On entend par passage croisé un double passage comprenant un premier passage dans une direction, par exemple de gauche à droite, suivi d'un deuxième passage dans une autre direction de préférence perpendiculaire à la direction du premier passage, par exemple de front en arrière. Le premier passage effectué permet aux agrégats de verre de prendre leur position quasi-définitive dans la structure du revêtement et le deuxième passage assure le comblement des vides éventuels et une meilleure stabilité dimensionnelle de la couche. Le rouleau de lissage utilisé est de préférence en matériau dur, par exemple de type métallique peu adhérent, de manière à éviter le maximum d'accrochage du mélange sur la surface du rouleau.

Une fois la couche de mélange posée, une quatrième étape consiste à sécher cette couche ainsi qu'à gratter les éventuels agrégats dépassant de la surface de la couche appliquée.

Suivant le rendu fini désiré, une étape optionnelle peut constituer à poncer la surface pour éliminer la couverture colorée de l'agrégat.

Suivant une variante avantageuse du procédé d'application, une étape optionnelle supplémentaire consiste à incruster un logo, un indicateur de direction, un sens de marche, une inscription, par exemple "WC", "sortie de secours", etc..., par un changement de couleur et/ou de façon lumineuse ou par intégration d'un tel élément externe pris directement dans le sol. Cette dernière variante présente l'avantage de pouvoir indiquer visiblement, par exemple de manière clignotante, une inscription du type "sortie de secours" en cas de danger. Une telle inscription lumineuse peut être réalisée soit au moyen de moyens d'illumination déposer sous le revêtement pour le cas où ce dernier est transparent ou translucide, ou même directement à travers le revêtement par l'introduction de fibres lumineuses ou de diodes électroluminescentes.

Une cinquième étape consiste à remplir une première fois au moyen d'une résine de préférence transparente une partie ou toute l'épaisseur du mélange posé, ce dernier étant poreux et présentant des aspérités à combler. Ce remplissage peut être effectué au moyen d'un seul passage de la résine de remplissage ou alternativement au moyen de deux ou trois passages rapides pour un support de sol sans chauffage et sans éclairage.

On notera que le principe de construction complètement rempli diminue fortement voire totalement, l'effet de traction rencontré avec la majorité des sols traditionnels à base de résine, ainsi qu'une bonne conduction de la chaleur. On notera qu'alternativement le principe de construction partiellement rempli permet de donner au revêtement une excellente propriété phonique et thermique grâce à la structure alvéolaire des couches inférieures dues aux passages successifs

Une étape supplémentaire éventuelle consiste à apporter sur le remplissage frais des décors et des garnitures tels des chips colorés, des paillettes, etc...

Pour obtenir une finition ou surface lisse, par opposition à une surface structurée, une sixième étape optionnelle consiste à effectuer un deuxième remplissage, encore appelé étape de vitrification, cette fois uniquement en surface avec la même résine transparente que pour le premier remplissage effectué dans la profondeur du mélange séché. De tels revêtements de sol ou muraux complètement remplis présentent de bonnes propriétés conductrices de chaleur pour le chauffage par le sol.

Une autre étape supplémentaire éventuelle consiste à appliquer un vernis de finition sur la surface structurée ou lisse séchée de manière à la rendre plus ou moins mate et éventuellement anti-dérapant.

Selon un troisième aspect, la présente invention concerne également la fabrication ou préfabrication de la composition de revêtements de sol, mural ou de plafond. Ce procédé de fabrication ou préfabrication d'une composition de revêtement de sol, mural ou de plafond comprend les étapes consistant à mélanger du verre recyclé avec un liant de manière à obtenir un matériau poreux présentant des aspérités; à sécher le matériau poreux; à couler un matériau de remplissage pour remplir les aspérités du matériau poreux.

En particulier, on notera qu'il est utile de réaliser des préfabrications, sous forme de plaques de tout format, pour les applications murales ou de plafond. On peut ainsi obtenir une continuité du revêtement appliqué au sol et sur un mur.

II est également envisageable de faire varier plus ou moins la transparence ou la translucidité du revêtement dans son épaisseur pour réaliser un éclairage incorporé dans la chape, dans le revêtement ou sur le revêtement avant l'étape de séchage, par exemple par fibre lumineuse, LED, néon, etc....

Ainsi il est possible de réaliser en continuité du revêtement de sol, des éclairages ou lumières d'ambiance de toutes formes, en particulier sortant directement du sol ou dans les murs, soit encore en relief.

Alternativement à des solutions sous forme de revêtement uniforme, il est possible de fabriquer à l'avance, selon n'importe laquelle des variantes explicitées dans la présente description, des carreaux ou plaques sous forme de carrelage ou de faïence murale ou pour plafond de toutes formes et dimensions avec ou sans réservation pour incorporation un éclairage. II est en outre possible de préfabriquer des plans de cuisine sans joint, des marches et contre marches d'escalier préformées, des meubles, par exemple des tables y compris les pieds, des chaises, etc.....

On notera encore que de tels revêtements sont d'une grande facilité d'entretien, et que les rénovations futures de la couche de finition sont simples et économiques, par un dépolissage de la surface et application d'un vernis de finition, sans toucher l'âme du revêtement de sol et en particulier le verre.

On comprendra que diverses modifications et / ou améliorations évidentes pour l'homme du métier peuvent être apportées aux différentes modes de réalisation de l'invention décrits dans la présente description sans sortir du cadre de l'invention défini par les revendications annexées.

En particulier, on notera qu'un tel revêtement est lui-même un excellent support pour toute autre application de revêtement de sol dans le cas d'une rénovation future. Ces revêtements peuvent être également des sols auto portant en fonction de leur épaisseur qui peut être choisie à loisir. En outre, ce type de revêtement est de par sa résistance aussi bien applicable en intérieur qu'en extérieur.

On notera également que les différents revêtements de sol, muraux ou de plafond, exposés ci-dessus pourront être réalisés sous forme de plaques séparées de tout format utilisables directement sous cette forme, les plaques étant séparées par un joint d'ombre, appelé encore joint négatif, (pour une pose murale ou de plafond) ou alternativement les plaques peuvent être accolées les unes aux autres pour former un revêtement de sol sous forme d'un damier sans joint.

On notera encore, qu'il est possible dans un souci d'économie de réduire la quantité de liant utilisé, qui est la matière la plus coûteuse, en ajoutant une portion de farine de verre dans le mélange, i.e. de fines particules de verre.

## Revendications

1. Revêtement de sol, mural ou de plafond comprenant un mélange de verre recyclé avec un liant, formant un matériau poreux présentant des aspérités **caractérisé en ce qu'**il comprend en outre un matériau de remplissage appliqué sur le matériau poreux séché pour en remplir les aspérités.

2. Revêtement selon la revendication 1, **caractérisé en ce que** le liant et le matériau de remplissage utilisés sont des résines transparentes ou translucides.

3. Revêtement selon la revendication 2, **caractérisé en ce que** le liant est une résine époxy ou polyuréthane bi-composante.

4. Revêtement selon la revendication 2 ou 3, **caractérisé en ce que** le matériau de remplissage est une résine époxy ou polyuréthane bi-composante résistante à l'abrasion et aux ultraviolets.

5. Revêtement selon l'une des revendications 2 à 4, **caractérisé en ce qu'**il comprend des moyens d'illumination disposés sous ou dans le matériau poreux.

6. Revêtement selon l'une des revendications précédentes, **caractérisé en ce qu'**il comprend en outre un élément de coloration choisi parmi du verre recyclé, une pigmentation ou une teinture.

7. Revêtement selon l'une des revendications précédentes, **caractérisé en ce que** le verre recyclé est constitué d'un agrégat de morceaux de verre pilé dont la granulométrie maximale de chacun des morceaux est inférieure à 6 millimètres.

8. Revêtement selon l'une des revendications précédentes, **caractérisé en ce qu'**il comprend un vernis sous forme aqueuse comme couche de finition pour fournir un aspect supérieur de finition modifié.

9. Revêtement selon l'une des revendications précédentes, **caractérisé en ce qu'**il comprend une incrustation d'un motif indicateur visible dans ou sur le revêtement.

10. Revêtement selon la revendication 1, **caractérisé en ce que** le mélange comprend en outre une portion de farine de verre diminuant ainsi la quantité de matériau de remplissage nécessaire.

11. Procédé d'application in situ d'un revêtement de sol comprenant les étapes consistant à:
(i) déposer un pont d'adhérence sur une surface au sol à recouvrir;
(ii) mélanger du verre recyclé avec un liant de manière à obtenir un matériau poreux présentant des aspérités;
(iii) appliquer le matériau poreux obtenu sur la surface au sol à recouvrir;
(iv) passer un rouleau de lissage de manière croisée sur le matériau poreux;
(v) sécher le matériau poreux;
(vi) couler un matériau de remplissage pour remplir les aspérités du matériau poreux au maximum jusqu'au niveau de sa surface supérieure et sécher.

12. Procédé d'application in situ selon la revendication 11, **caractérisé en ce qu'**il comprend les étapes supplémentaires suivantes:
(vii) ponçage de la surface supérieure pour éliminer les irrégularités;
(viii) vitrifier la surface supérieure par application d'une résine;
(ix) sécher la couche vitrifiée;
(x) vernir par application d'une couche supplémentaire de résine;
(xi) passer un rouleau à poil de manière croisée et sécher.

13. Procédé de fabrication d'une composition de revêtement de sol, mural ou de plafond comprenant les étapes consistant à:
- mélanger du verre recyclé avec un liant de manière à obtenir un matériau poreux présentant des aspérités;
- sécher le matériau poreux;
- remplir les aspérités du matériau poreux par une résine.

14. Procédé de fabrication selon la revendication 13, pour lequel le liant et la résine de remplissage utilisés sont des résines transparentes ou translucides, le procédé comprenant une étape supplémentaire consistant à introduire des moyens d'illumination à travers le matériau poreux avant séchage.

15. Meuble réalisé avec un revêtement selon l'une des revendications 1 à 10.
